**Europäisches Patentamt**

**European Patent Office**

**Office européen des brevets**

(19)

(11) Numéro de publication : **0 485 269 A1**

# (12) DEMANDE DE BREVET EUROPEEN

(21) Numéro de dépôt : **91402943.4**

(22) Date de dépôt : **04.11.91**

(51) Int. Cl.$^5$ : **G06K 9/48, G06K 9/66**

(30) Priorité : **09.11.90 FR 9013943**

(43) Date de publication de la demande :
**13.05.92 Bulletin 92/20**

(84) Etats contractants désignés :
**DE GB IT**

(71) Demandeur : **THOMSON-CSF**
**51, Esplanade du Général de Gaulle**
**F-92800 Puteaux (FR)**

(72) Inventeur : **Burel, Gilles**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé de reconnaissance d'objets tridimensionnels par analyse d'image.**

(57) Le procédé de reconnaissance d'objets tridimensionnels consiste à projeter un objet donné en deux dimensions sur une image, à extraire le contour de l'objet, à le décomposer en série de Fourier, à normaliser les coefficients de Fourier basse-fréquence ainsi obtenus et à les présenter à l'entrée d'un réseau de neurones multicouches ayant préalablement appris à reconnaître différentes classes d'objets. La configuration de sortie du réseau de neurones détermine à quelle classe, parmi les classes apprises, appartient l'objet considéré.

Application aux domaines du traitement d'images nécessitant l'identification d'objets.

début

51 — projection en deux dimensions d'un objet en trois dimensions

52 — extraction du contour de l'objet

53 — rééchantillonnage du contour

54 — calcul des coefficients de Fourier

55 — normalisation des coefficients de Fourier basse fréquence

56 — entrée du réseau de neurones multi-couches

57 — classification

fin

**FIG.5**

EP 0 485 269 A1

L'invention se rapporte au domaine de la vision par ordinateur, et plus particulièrement à un procédé de reconnaissance d'objets tridimensionnels projetés en deux dimensions sur une image à partir d'une seule vue de l'objet. Elle trouve ses applications dans le domaine des chaines de montage automatisées et de la robotique et plus généralement dans les domaines du traitement d'images nécessitant l'identification d'objets tels que par exemple la reconnaissance de cibles assez proches .

Les systèmes de reconnaissance connus sont généralement basés sur la comparaison avec des modèles. Il existe des méthodes stéréoscopiques qui permettent de reconstruire en volume l'objet à reconnaître. Ces méthodes disposent d'un ensemble de modèles tridimensionnels de plusieurs objets. Après reconstruction, en trois dimensions, de l'objet à reconnaître, la méthode consiste à rechercher le modèle tridimensionnel qui s'en rapproche le plus. Ces méthodes peuvent fournir précisément la position de l'objet en plus de la reconnaissance, sous réserve d'une bonne qualité d'image, mais sont coûteuses en matériel, en puissance de calcul requise et en effort de mise en oeuvre.

Il existe des méthodes utilisant plusieurs modèles bidimensionnels de différents objets. Pour chaque objet, on dispose de nombreuses vues, bien réparties autour de l'objet. La reconnaissance d'un objet sur une image nouvelle consiste à extraire des caractéristiques, par exemple des segments, ou des faces, sur l'image, et à chercher à les mettre en correspondance avec les caractéristiques des modèles. Les principaux problèmes que posent ces méthodes sont les suivants :

– la modélisation d'un objet quelconque est difficile et il est souvent préférable de se limiter à des objets polygonaux. De plus, la modélisation nécessite généralement l'intervention d'un opérateur, ce qui est coûteux.

– La mise en concordance des caractéristiques extraites de l'image avec les modèles est coûteuse en puissance de calcul.

Pour remédier à ces problèmes, l'invention a pour objet un procédé de reconnaissance d'objets tridimensionnels utilisant une approche différente, selon laquelle, dans une phase préalable, un apprentissage par un réseau de neurones est effectué à partir d'images comportant des projections en deux dimensions d'exemples d'objets tridimensionnels, chaque objet étant disponible sous de nombreuses vues différentes, bien réparties autour de l'objet. A l'issue de cette phase, le réseau de neurones est capable de reconnaître rapidement un objet tridimensionnel sur une image nouvelle.

Ce procédé a l'avantage de fonctionner par apprentissage et ne nécessite donc pas de modélisation explicite des objets ni de stéréoscopie ; il ne nécessite pas d'intervention humaine ni de limitation à des objets polygonaux ; sa mise en oeuvre est aisée, la reconnaissance des objets est très rapide, nécessite une puissance de calcul réduite et peut être effectuée à partir d'une seule vue de l'objet, bien qu'il soit possible d'améliorer les taux de reconnaissance en utilisant plusieurs vues du même objet.

Selon l'invention, le procédé de reconnaissance d'objets tridimensionnels est caractérisé en ce qu'il consiste :

– dans une phase préalable, et pour un nombre fixé d'exemples d'objets tridimensionnels, à effectuer des projections en deux dimensions de ces exemples d'objets tridimensionnels de façon à obtenir un fichier d'images représentant les objets sous de nombreuses vues différentes réparties en plusieurs classes, à extraire le contour externe des objets, à décomposer ce contour en série de Fourier, et à normaliser les coefficients basse fréquence de la décomposition en série de Fourier,

– dans une phase d'apprentissage, pour chaque exemple d'objets tridimensionnels, les valeurs des coefficients de Fourier normalisés sont utilisées pour ajuster, par approches successives, les valeurs des coefficients de pondération d'un réseau de neurones jusqu'à ce que les valeurs de sorties du réseau de neurones soient représentatives des différentes classes d'objets considérées.

– enfin, dans une phase de reconnaissance, les valeurs des coefficients de Fourier normalisés d'un objet à reconnaître sont calculées et présentées aux entrées du réseau de neurones qui, par application des coefficients de pondération fixés en fin de phase d'apprentissage, donne une configuration de sortie à partir de laquelle est déterminé à quelle classe, parmi les classes apprises, appartient l'objet considéré.

D'autres particularités et avantages de l'invention apparaîtront clairement dans la description suivante donnée à titre d'exemple non limitatif et faite en regard des figures annexées qui représentent :

– la figure 1 , un schéma synoptique d'un neurone, selon l'invention,

– la figure 2, un schéma synoptique d'un réseau de neurones multi-couches, selon l'invention,

– les figures 3a et 3b, différents contours relatifs à un support de ruban adhésif vu sous des angles différents ; l'angle azimutal est respectivement égal à 0° et 30°, l'angle de rotation θ autour de l'axe vertical varie de 180° à 350°,

– la figure 4, un organigramme de la phase d'apprentissage, selon l'invention,

– la figure 5, un organigramme de la phase de reconnaissance, selon l'invention.

Comme indiqué ci-dessus, les systèmes de reconnaissance d'objets tridimensionnels nécessitent des

2

modèles. Ces modèles sont en nombre restreint et la reconnaissance des objets est limitée à ceux-ci. De plus, la modélisation est généralement une opération difficile et coûteuse. L'invention permet de remédier à ce problème en utilisant un réseau de neurones ayant un nombre de degrés de liberté suffisant pour pouvoir, en fixant ces différents degrés de liberté, obtenir en sortie du réseau de neurones le résultat attendu pour différentes classes d'objets dites "apprises", ce réseau pouvant être ensuite utilisé pour des images nouvelles et pour déterminer à quelle classe appartiennent les objets tridimensionnels projetés sur l'image par analogie avec ces classes d'objets.

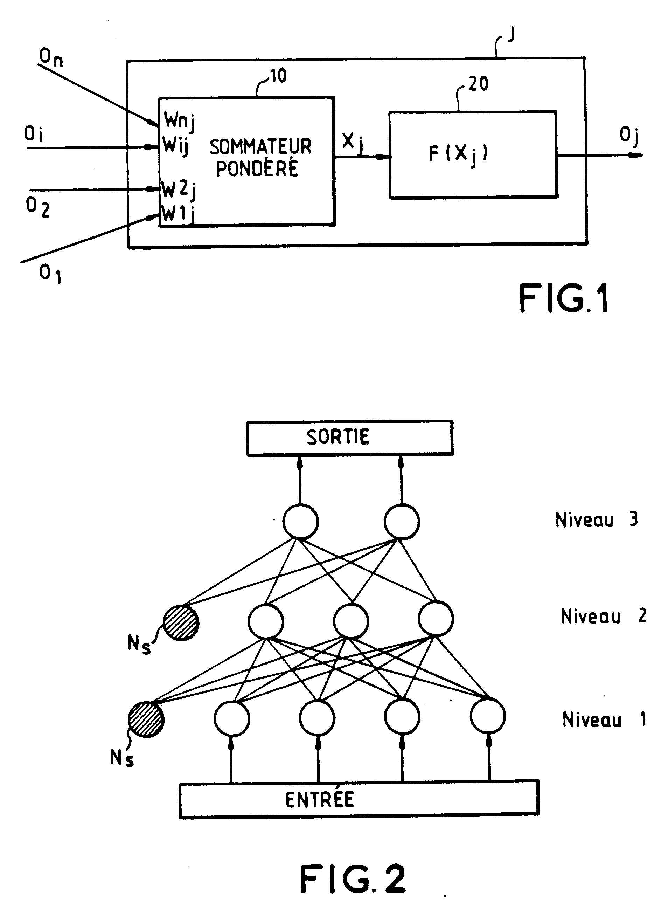

La figure 1 représente un schéma synoptique d'un neurone. Un neurone J peut être modélisé à l'aide d'un sommateur pondéré, 10, associé à un dispositif de calcul d'une fonction, 20. Les valeurs aux entrées $O_1$, $O_2$, ..., $O_i$...,$O_n$ du sommateur pondéré, 10, sont multipliées par des coefficients de pondération respectivement $W_{1j}$, $W_{2j}$, ..., $W_{iJ}$, ..., $W_{nj}$ puis additionnées pour former une valeur intermédiaire $X_j$ appelée potentiel du neurone J à laquelle est appliqué un calcul de fonction correspondant, $F(X_j)$, qui fournit la valeur de la sortie $O_j$ de ce neurone J. La fonction $F(X_j)$ est de préférence, une fonction non linéaire tangente hyperbolique.

$$O_j = F(X_j) = th(X_j/2)$$

Cette fonction tangente hyperbolique permet d'obtenir une valeur de sortie $O_j$ qui tend vers +1 ou -1 lorsque les valeurs intermédiaires $X_j$ augmentent en valeur absolue.

La figure 2 représente un schéma synoptique d'un réseau de neurones multi-couches, selon l'invention. Ce réseau de neurones est organisé en plusieurs niveaux, les sorties d'un niveau constituant les entrées du niveau suivant, de telle façon que, en tenant compte de valeurs caractéristiques calculées sur des exemples et présentées aux neurones du premier niveau du réseau, les coefficients de pondération évoluent en cours d'apprentissage jusqu'à ce que les neurones du dernier niveau du réseau fournissent pour tous les exemples d'une classe d'objets donnée un coefficient +1 sur la sortie du neurone correspondant à cette classe d'objets, et des coefficients -1 sur l'ensemble des sorties des autres neurones.

Les valeurs caractéristiques calculées sur les différents exemples de chacune des classes d'objets, puis sur les objets à classifier, sont les valeurs des coefficients basse fréquence normalisés de la décomposition en série de Fourier de la silhouette de l'objet à reconnaître.

Le réseau de neurones utilisé et représenté sur la figure 2 est un réseau seuillé, c'est-à-dire qu'il comporte sur chacun de ses niveaux, sauf le niveau de sortie, un neurone supplémentaire appelé neurone seuil, NS, dont l'état reste toujours égal à 1 et qui permet d'ajouter un degré de liberté supplémentaire dans la masse d'informations que constituent les coefficients de pondération dits "poids". Ce degré de liberté supplémentaire permet au réseau d'apprendre plus facilement et plus vite.

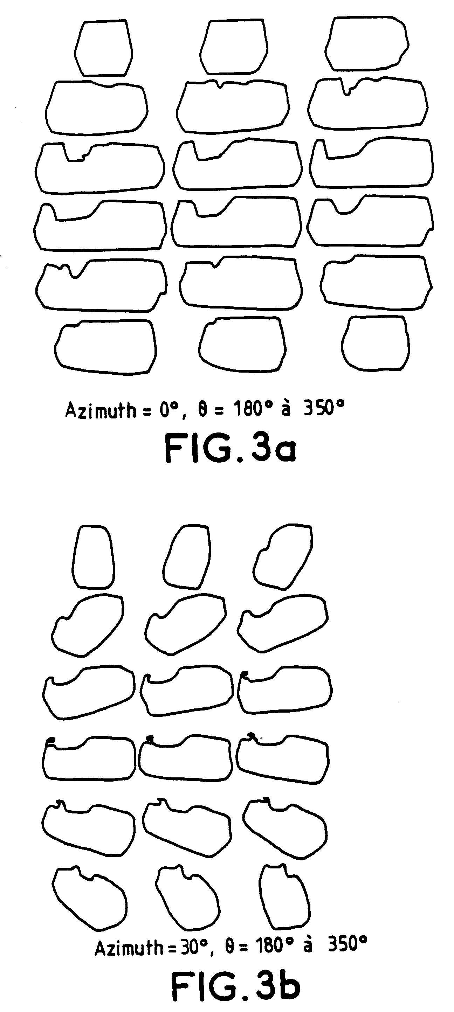

Le réseau de la figure 3 comporte trois niveaux:

– le premier niveau comporte un nombre de neurones N1 égal au nombre d'entrées, c'est-à-dire au nombre de coefficients de Fourier basse fréquence normalisés calculés pour chaque objet, et en outre un neurone seuil qui n'est pas connecté aux entrées.

Les neurones de ce premier niveau ne font que recopier les entrées.

– le deuxième niveau comporte un nombre N2 de neurones compris entre N1 et la valeur N3 du nombre de neurones du dernier niveau. Chaque neurone du deuxième niveau a (N1+1) entrées reliées aux (N1+1) sorties des neurones du premier niveau et du neurone seuil. Le deuxième niveau comporte en outre un neurone seuil qui n'est pas relié aux neurones du premier niveau.

– le troisième niveau comporte un nombre de neurones N3 égal au nombre de classes d'objets utilisées pendant la phase d'apprentissage et qui pourront être reconnues dans les images dans une phase ultérieure de classification. Les entrées des neurones du dernier niveau sont reliées aux (N2+1) sorties des neurones du deuxième niveau. Ce niveau ne comporte pas de neurone seuil.

Le dispositif fonctionne de la manière suivante:

un prétraitement est réalisé pour extraire des valeurs caractéristiques d'un objet tridimensionnel à apprendre ou à reconnaître.

Dans un premier temps, une base de données d'images, ou fichier d'exemples, est constituée à partir de plusieurs objets tridimensionnels projetés en deux dimensions de façon à obtenir différentes vues de l'objet sous des angles différents. A titre d'exemple, une base de données de 216 images de taille environ égale à 300 x 200 pixels a été constituée à partir de trois objets tridimensionnels différents.

Pour chaque objet deux séries d'images ont été obtenues en plaçant l'objet sur une table tournante et en faisant tourner la table autour de son axe vertical par pas de dix degrés, l'angle de rotation étant appelé angle θ. Une série d'images a été effectuée avec un angle azimutal de prise de vues égal à 0° et l'autre série avec un angle azimutal de prise de vues égal à 30°.

Le fichier des exemples étant constitué, une image est extraite aléatoirement de ce fichier. La silhouette, c'est-à-dire le contour extérieur de l'objet, est alors extrait de cette image par un dispositif à seuil suivi d'un dispositif de détection de surface connexe. La surface ainsi obtenue est ensuite gardée ou supprimée de façon

3

automatique ou de façon interactive par un opérateur suivant qu'elle correspond à un objet ou à un reflet. Un suivi de contour est ensuite effectué et des valeurs caractéristiques correspondant à ce contour sont calculées.

A titre d'exemple, les figures 3a et 3b représentent différents contours relatifs à un support de ruban adhésif vu sous des angles différents. Les figures 3a et 3b correspondent à un angle azimutal égal respectivement à 0° et à 30° et un angle de rotation θ autour de l'axe vertical variant de 180° à 350°.

Dans un deuxième temps des valeurs caractéristiques de la silhouette de l'objet sont calculées en utilisant des fonctions de base. Les fonctions de base des séries de Fourier ont des propriétés intéressantes, notamment, une translation, une rotation et une dilatation peuvent être effectuées par de simples opérations en représentation dans l'espace transformé.

Le contour d'un objet pris, par exemple, dans le sens inverse des aiguilles d'une montre, peut être considéré comme une succession de points, et une abscisse curviligne peut être définie sur ce contour. Cependant la distance entre deux points successifs ainsi obtenus sur ce contour n'est pas constante, ce qui rend impossible le calcul des coefficients de Fourier. Pour pouvoir utiliser les fonctions de base des séries de Fourier, une solution consiste à rééchantillonner le contour de l'objet de façon à obtenir un contour de vitesse uniforme de N points équidistants. Un exemple de rééchantillonnage du contour d'origine est tel que la distance entre des points de connexité 4 est prise égale à 1, et la distance entre des points de connexité 8 est prise égale à $\sqrt{2}$. Lorsque le contour d'origine a été complètement rééchantillonné, toutes les distances séparant deux points successifs sont égales. Pour des images de faible résolution, ce type de rééchantillonnage ne convient pas et il est nécessaire d'utiliser un rééchantillonnage plus complexe tel que, par exemple, en utilisant une approximation polygonale.

En notant U (m) les points du contour rééchantillonné (ces points peuvent être considérés comme des vecteurs dans le plan complexe), les coefficients de Fourier sont obtenus par l'équation (1) suivante :

$$(1) \quad C(n) = 1/N \sum_{m=0}^{N-1} U(m) \, e^{-j2\pi \, nm/N}$$

Il y a N coefficients de Fourier, et C(n) est le coefficient de Fourier d'ordre n. La transformation de Fourier inverse est la suivante :

$$(2) \quad U(m) = \sum_{n=0}^{N-1} C(n) \, e^{j2\Pi \, nm/N}$$

Lorsque les N coefficients de Fourier ont été calculés, ils sont normalisés de façon à être invariants par rapport à une rotation du dispositif de prise de vues des objets, ou caméra, autour de son axe optique, une modification de la distance caméra-objet, et une translation parallèle au plan focal ; ainsi les coefficients de Fourier sont invariants lorsqu'entre deux images un objet a subi l'une des transformations géométriques suivantes : une translation, une rotation, une dilatation ou un décalage du point de début du contour.

Lorsqu'un objet a subi une translation T, les coefficients de Fourier deviennent :
$$U'(m) = U(m) + T$$
$$C'(O) = C(O) + T$$

Lorsqu'un objet a subi une rotation d'angle $\phi$, les coefficients de Fourier deviennent :
$$U'(m) = U(m) \, e^{j\phi}$$
$$C'(n) = C(n) \, e^{j\phi}$$

Lorsque les points du contour d'un objet ont subi une dilatation d'un facteur $\rho$, les coefficients de Fourier deviennent :
$$U'(m) = \rho \, U(m)$$
$$C'(n) = \rho \, C(n)$$

Lorsque les points du contour d'un objet ont subi un décalage de k points, les coefficients de Fourier deviennent :
$$U'(m) = U[(m + k) \text{ modulo } N]$$
$$C'(n) = C(n) \, e^{2j\pi \, kn/N}$$

Pour que les coefficients de Fourier soient invariants en fonction de ces quatre transformations il est nécessaire de normaliser ces coefficients. Un exemple de normalisation consiste à :

. ne pas tenir compte du coefficient d'ordre O, C'(O), de façon à obtenir l'invariance par translation

. diviser tous les coefficients par le coefficient d'ordre 1, C'(1), de façon à obtenir l'invariance par rotation et par dilatation

$K'(n) = C'(n)/C'(1) = K(n) \exp (2jk(n-1)/N)$

. multiplier tous les coefficients par $\exp (j(1-n)\phi'_2)$ où $\phi'_2$ est la phase de K'(2) et est égale à $(\phi_2 +(2\pi k/N))$ pour obtenir l'invariance par un décalage des points du contour $P'(n) = K'(n) \exp (j(1-n)\phi'_2) = P(n)$

La phase $\phi'_2$ du coefficient K'(2) doit être arrondie à la valeur la plus proche de la forme $2\pi 1/N$, où 1 est un nombre entier, afin d'éviter des incohérences dans les coefficients de Fourier normalisés, ce qui ne permettrait pas de pouvoir les interpréter comme le résultat d'un décalage discret des points du contour.

Après avoir effectué cette normalisation, la forme des objets peut être reconstituée sans perte d'information. Les objets subissent uniquement une composition de translation, de rotation et de dilatation. Seuls les coefficients de Fourier normalisés correspondant aux basses fréquences sont utilisés car ils contiennent l'information de forme de l'objet, les hautes fréquences représentant du bruit de quantification.

Le prétraitement décrit ci-dessus et consistant à extraire les coefficients de Fourier normalisés d'un objet tridimensionnel, est effectué pour tout objet à classifier que ce soit en phase d'apprentissage ou en phase de reconnaissance. L'apprentissage est du type dit "supervisé", c'est-à-dire que pour des exemples d'une classe d'objets donnée, l'opérateur apprend au réseau de neurones à reconnaître cette classe d'objets en lui indiquant les valeurs que doivent avoir ses sorties pour cette classe d'objets. La même classe d'objets est présentée plusieurs fois au réseau de neurones jusqu'à ce que le réseau ne restitue plus aucune sortie fausse. A titre d'exemple, en considérant la base de données d'images précédemment constituée à partir de trois objets tridimensionnels différents, les trois objets peuvent être répartis en 6 classes différentes de la façon suivante :

– les classes 0 et 1 correspondent à l'objet n°1 vu sous un angle azimutal égal respectivement à 0° et à 30°

– les classes 2 et 3 correspondent à l'objet n°2 vu sous un angle azimutal égal respectivement à 0° et à 30°

– les classes 4 et 5 correspondent à l'objet n°3 vu sous un angle azimutal égal respectivement à 0° et à 30°.

Les sorties du réseau de neurones pour cet exemple doivent être au nombre de six et leurs valeurs seront par exemple les suivantes :

(+1,-1,-1,-1,-1,-1) pour la classe 0

(-1,+1,-1,-1,-1,-1) pour la classe 1

(-1,-1,+1,-1,-1,-1) pour la classe 2

(-1,-1,-1,+1,-1,-1) pour la classe 3

(-1,-1,-1,-1,+1,-1) pour la classe 4

(-1,-1,-1,-1,-1,+1) pour la classe 5.

Pendant la phase d'apprentissage, le réseau de neurones ajuste les coefficients de pondération à partir de valeurs de départ arbitraires, par approches successives, en utilisant tous les exemples d'une classe ou de plusieurs classes d'objets, éventuellement plusieurs fois, et dans un ordre quelconque aléatoire. A l'issue de la phase d'apprentissage une classe d'objets donnée correspond à l'obtention d'un coefficient de pondération aussi proche de 1 que possible sur la sortie du réseau caractéristique de cette classe, et aussi proche de -1 que possible sur les autres sorties, et ce pour chacune des classes d'objets considérées.

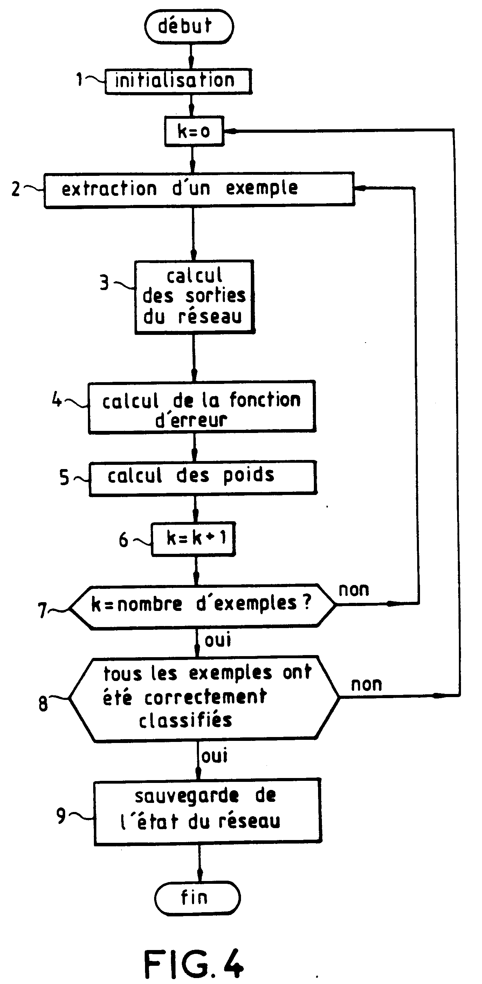

La phase d'apprentissage est effectuée de la manière suivante décrite ci-après en référence à la figure 4. L'algorithme d'apprentissage utilisé est l'algorithme de rétropropagation.

Dans une étape d'initialisation, 1, les coefficients de pondération $W_{ij}$ sont tout d'abord initialisés en utilisant une loi de probabilité $P(W_{ij})$ uniforme dans l'intervalle -M, +M. L'apprentissage consiste alors en la modification des coefficients de pondération $W_{ij}$, cette modification des coefficients se déroulant de la façon suivante : à un rang d'itération k donné, dans une étape 2, un objet exemple est extrait parmi différents exemples et les valeurs des coefficients de Fourier normalisés correspondant aux basses fréquences et calculées pour cet objet sont appliquées aux entrées du réseau de neurones. Les sorties correspondantes du réseau sont alors calculées, dans une étape 3. Cet exemple étant caractéristique d'une classe d'objets donnée devra donner en fin d'apprentissage, en sortie du neurone associé à cette classe, un coefficient égal à +1 ou voisin de +1, les sorties des autres neurones du dernier niveau donnant des valeurs négatives aussi proches de -1 que possible. Une fonction d'erreur est calculée dans une étape 4 en comparant les valeurs de sortie $O_j$ du réseau aux valeurs de sortie $S_j$ désirées. L'erreur sur la sortie, notée $E_j$, par rapport à la sortie désirée est mesurée par la valeur $1/2 (O_j-S_j)^2$. L'erreur de sortie totale E est la somme des erreurs $E_j$ ainsi calculées pour l'ensemble des sorties de j=1 à N3. Dans une étape 5 le calcul des poids, ou coefficients de pondération est effectué. Les valeurs des coefficients de pondération sont modifiées en tenant compte des modifications des coefficients de pondération effectuées au rang d'itération précédent, k-1, ces valeurs étant pondérées par un coefficient de filtrage $\beta$, et de la dérivée de la fonction d'erreur pondérée par une valeur d'un paramètre $\eta$, dit "vitesse d'apprentis-

sage", de la manière suivante :

$$\Delta W_{ij}\,(k) \;=\; -\eta \frac{\partial E}{\partial W_{ij}}\,(k) \;+\; \beta\,\Delta W_{ij}\,(k\text{-}1)$$

Cette modification des coefficients de pondération permet de faire varier les valeurs des poids $W_{iJ}$ en fonction inverse du gradient d'erreur, tout en tenant compte des variations effectuées à l'itération précédente, c'est-à-dire en effectuant un filtrage passe-bas qui permet d'éviter des oscillations pour conserver la valeur moyenne de la variation du coefficient de pondération.

Ces coefficients étant modifiés, le rang de l'itération est incrémenté dans l'étape 6, un test est effectué, dans une étape 7, pour voir si tous les exemples ont été présentés au réseau de neurones, sinon un nouvel exemple d'objets est présenté aux entrées du réseau de neurones et la même opération est effectuée plusieurs fois à partir de tous les exemples disponibles ; puis lorsque tous les exemples ont été présentés au moins une fois, un test est effectué dans une étape 8, afin de voir si tous les exemples ont été correctement classifiés sinon, le rang de l'itération est remis à zéro et le processus est recommencé depuis le début jusqu'à ce que les sorties du réseau de neurones soient toujours dans l'état correspondant au type de classe utilisé, c'est-à-dire que pour tous les exemples, les sorties soient proches de -1 pour toutes celles qui ne correspondent pas à l'exemple et proche de +1 pour celle qui correspond à l'exemple, quel que soit l'exemple considéré.

Les paramètres d'apprentissage $\eta$ et de filtrage $\beta$ sont choisis par l'opérateur, par exemple il pourra choisir $\eta = 0{,}005$ et $\beta = 0{,}985$.

Lorsque la phase d'apprentissage est terminée , le réseau de neurones est capable de reconnaître à quelle classe appartient un objet d'une image inconnue, son état est sauvegardé dans une étape 9, c'est-à-dire que les coefficients de pondération sont gelés et sauvegardés et le réseau de neurones peut être utilisé à des fins de reconnaissance d'objets tridimensionnels.

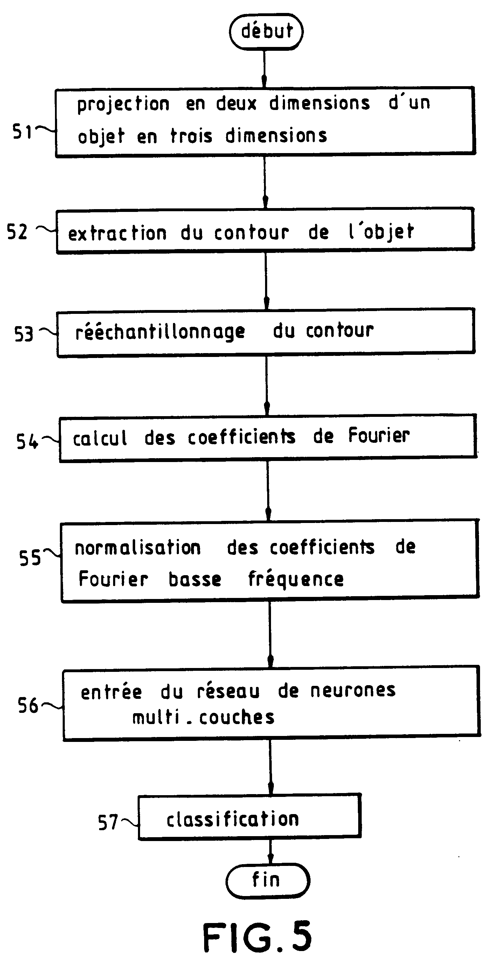

La figure 5 représente un organigramme de la phase de reconnaissance d'objets tridimensionnels.

En phase de reconnaissance, dans une étape 51 une image nouvelle représentant la projection en deux dimensions d'un objet tridimensionnel est analysée. Dans une étape 52, l'extraction du contour extérieur de l'objet présent sur l'image est effectuée et rééchantillonné dans une étape 53, de façon à obtenir un contour de vitesse uniforme de N points équidistants. Le contour rééchantillonné est ensuite décomposé en série de Fourier dans une étape 54, et dans une étape 55, les coefficients basse-fréquence de la décomposition en série de Fourier sont normalisés et constituent alors les valeurs caractéristiques de l'objet à classifier. Dans une étape 56, ces valeurs sont appliquées à l'entrée du réseau de neurones multi-couches et conduisent par l'application des coefficients de pondération fixés en fin de phase d'apprentissage, à des valeurs de sortie.

Dans une étape 57, la classe attribuée à l'objet correspond alors à la classe associée au neurone de sortie ayant la plus forte valeur. Une mesure de confiance est attribuée à cette classification. Cette confiance est calculée de la manière suivante : si j1 est le numéro de neurone dont la sortie a la valeur la plus forte, la confiance est mesurée par la valeur minimum de l'écart entre la valeur de la sortie la plus forte et la valeur de chacune des autres sorties :

– confiance = MIN $(1/2\,(O_{j1} - O_j))$

Le coefficient de confiance ayant été normalisé en divisant par 2, la confiance est une valeur comprise entre 0 et 1, la valeur 1 correspondant à la confiance maximale.

L'invention n'est pas limitée au procédé précisément décrit ci-dessus. En particulier, il est possible d'utiliser un réseau de neurones qui ne soit pas seuillé, d'utiliser un modèle de neurone différent avec un algorithme d'apprentissage différent.

## Revendications

**1 -** Procédé de reconnaissance d'objets tridimensionnels par analyse d'image, caractérisé en ce qu'il consiste :

– dans une phase préalable, et pour un nombre fixé d'exemples d'objets tridimensionnels, à effectuer des projections en deux dimensions de ces exemples d'objets tridimensionnels de façon à obtenir un fichier d'images représentant les objets sous de nombreuses vues différentes réparties en plusieurs classes, à extraire le contour externe des objets, à décomposer ce contour en série de Fourier, et à normaliser les coefficients basse-fréquence de la décomposition en série de Fourier,

– dans une phase d'apprentissage, pour chaque exemple d'objet tridimensionnel, les valeurs des coefficients de Fourier normalisés sont utilisées pour ajuster, par approches sucessives, les valeurs des coefficients de pondération d'un réseau de neurones jusqu'à ce que les valeurs de sorties du réseau de neurones soient représentatives des différentes classes d'objets considérées.

– enfin, dans une phase de reconnaissance, les valeurs des coefficients de Fourier normalisés d'un objet à reconnaître sont calculées et présentées aux entrées du réseau de neurones qui, par application des coefficients de pondération fixés en fin de phase d'apprentissage, donne une configuration de sortie à partir de laquelle est déterminé à quelle classe, parmi les classes apprises, appartient l'objet considéré.

**2 -** Procédé selon la revendication 1, caractérisé en ce que l'algorithme d'apprentissage est l'algorithme de rétropropagation.

**3 -** Procédé selon la revendication 2, caractérisé en ce que les neurones du réseau comportent un sommateur pondéré (10) associé à un dispositif de calcul d'une fonction non linéaire (20).

**4 -** Procédé selon la revendication 1, caractérisé en ce que le réseau de neurones est un réseau seuillé.

FIG.1

FIG.2

Azimuth = 0°, θ = 180° à 350°

# FIG.3a

Azimuth = 30°, θ = 180° à 350°

# FIG.3b

FIG.4

```
                        ( début )
                            │
                            ▼
        ┌───────────────────────────────────────┐
   51 ──┤  projection  en deux dimensions  d'un  │
        │  objet en trois dimensions             │
        └───────────────────────────────────────┘
                            │
                            ▼
        ┌───────────────────────────────────────┐
   52 ──┤  extraction du contour  de  l'objet    │
        └───────────────────────────────────────┘
                            │
                            ▼
        ┌───────────────────────────────────────┐
   53 ──┤  rééchantillonnage    du contour       │
        └───────────────────────────────────────┘
                            │
                            ▼
        ┌───────────────────────────────────────┐
   54 ──┤  calcul  des coefficients  de Fourier  │
        └───────────────────────────────────────┘
                            │
                            ▼
        ┌───────────────────────────────────────┐
   55 ──┤  normalisation   des coefficients  de  │
        │  Fourier  basse   fréquence            │
        └───────────────────────────────────────┘
                            │
                            ▼
        ┌───────────────────────────────────────┐
   56 ──┤  entrée  du réseau  de neurones        │
        │         multi . couches                │
        └───────────────────────────────────────┘
                            │
                            ▼
              ┌───────────────────────┐
         57 ──┤   classification      │
              └───────────────────────┘
                            │
                            ▼
                        (  fin  )
```

# FIG.5

## EP 0 485 269 A1

Office européen
des brevets

## RAPPORT DE RECHERCHE EUROPEENNE

Numero de la demande

EP 91 40 2943

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | OPTICAL ENGINEERING. vol. 23, no. 5, Septembre 1984, BELLINGHAM US pages 484 - 491; O. R. MITCHELL ET AL.:: 'Global and partial shape discrimination for computer vision' * paragraphe 2.2, 2.3; fig. 7 * --- | 1,2,4 | G06K9/48 G06K9/66 |
| Y | ICASSP 88: 1988 INTERNATIONAL CONFERENCE ON ACOUSTICS, SPEECH AND SIGNAL PROCESSING, 11-14 AVRIL 1988 NEW YORK US pages 936 - 939; LALIT GUPTA ET AL.: 'Neural Networks for Planar Shape Recognition' * chapitres 3, 4 * --- | 1,2,4 | |
| A | IEEE REGION 5 CONFERENCE 1988: SPANNING THE PEAKS OF ELECTROTECHNOLOGY, 21 - 23 MARS 1988 COLORADO SPRINGS, COLORADO US pages 187 - 191; L. B. MOOREHEAD ET AL.: 'A NEURAL NETWORK FOR SHAPE RECOGNITION' * page 187, colonne de gauche, ligne 1 - page 188, colonne de gauche, ligne 6; figures 1.1,1.2 * --- | 1,4 | DOMAINES TECHNIQUES RECHERCHES (Int. Cl.5 ) G06K |
| A | IEEE TRANSACTIONS ON ACOUSTICS,SPEECH AND SIGNAL PROCESSING. vol. 36, no. 7, Juillet 1988, NEW YORK US pages 1135 - 1140; R. P. GORMAN ET AL.: 'Learned Classification of Sonar Targets Using a Massively Parallel Network' * figure 1 * ----- | 3 | |

Le présent rapport a été établi pour toutes les revendications

| Lieu de la recherche | Date d'achèvement de la recherche | Examinateur |
|---|---|---|
| LA HAYE | 25 FEVRIER 1992 | Michiel E. Sonius |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................
& : membre de la même famille, document correspondant

EPO FORM 1503 03.82 (P0402)

12